# EUROPÄISCHE PATENTSCHRIFT

(11) **EP 2 324 270 B1**
(45) Veröffentlichungstag und Bekanntmachung des Hinweises auf die Patenterteilung: **10.10.2012**
(21) Anmeldenummer: 09781704.3
(22) Anmeldetag: 11.08.2009
(51) Int. Cl.: F16H 57/12, F16H 1/16, B60N 2/02, B60N 2/06, F16H 25/20, F16H 57/00

(54) **VERSTELLGETRIEBE FÜR EINE VERSTELLEINRICHTUNG EINES KRAFTFAHRZEUGS**
ADJUSTING GEARING FOR AN ADJUSTING DEVICE OF A MOTOR VEHICLE
MÉCANISME DE POSITIONNEMENT POUR UN DISPOSITIF DE POSITIONNEMENT D UN VÉHICULE AUTOMOBILE

(30) Priorität: 12.08.2008 DE 202008010921 U
(43) Veröffentlichungstag der Anmeldung: 25.05.2011
(73) Patentinhaber: Brose Fahrzeugteile GmbH & Co. KG, Coburg, 96450 Coburg (DE)
(72) Erfinder: KRÖNER, Gregor, 96120 Bischberg (DE); SÜß, Matthias, 96269 Großheirath (DE); HOFMANN, Jochen, 96257 Marktgraitz (DE); NEUMANN, Guido, 04155 Leipzig (DE); BAUERSACHS, Andrea, 96237 Ebersdorf (DE)
(74) Vertreter: Ninnemann, Detlef
(86) Internationale Anmeldenummer: PCT/EP2009/060384
(87) Internationale Veröffentlichungsnummer: WO 2010/018172

(56) Entgegenhaltungen:
- EP-A- 1 645 458
- WO-A-99/11502
- DE-A1- 10 308 028

## Beschreibung

Die Erfindung betrifft ein Verstellgetriebe für eine Verstelleinrichtung eines Kraftfahrzeugs nach dem Oberbegriff des Anspruchs 1.

Eine derartige Verstelleinrichtung wird zur Einstellung von zwei relativ zueinander beweglichen Verstellteilen in einem Kraftfahrzeug eingesetzt, insbesondere zur Einstellung eines Sitzteils eines Kraftfahrzeugsitzes, und weist für diesen Anwendungsfall zwei sich in eine Längsrichtung erstreckende, relativ zueinander verschiebbare Führungsschienen, ein Verstellgetriebe, eine Spindel und eine Spindelmutter auf. Das Verstellgetriebe ist mit einer der beiden Führungsschienen verbunden, während die Spindel in einer ersten der beiden Führungsschienen gelagert ist und mit dem Verstellgetriebe in Eingriff steht. Indem bei einer drehbar gelagerten Spindel das Verstellgetriebe die Spindel in eine Drehbewegung versetzt oder alternativ bei einer feststehenden Spindel sich eine Spindelmutter des Verstellgetriebes auf der Spindel abrollt, wird die erste der beiden Führungsschienen relativ zur anderen, zweiten Führungsschiene verschoben und dadurch ein Verstellteil, beispielsweise die mit einem Sitzuntergestell des Kraftfahrzeugsitzes verbundene erste Führungsschiene, bewegt.

Eine Verstelleinrichtung der genannten Art ist aus der JP 2005/06521 A in Form einer so genannten Front-Drive-Unit bekannt, bei der das Verstellgetriebe am ersten Ende der ersten, oberen Führungsschiene angeordnet ist und eine Drehbewegung auf eine drehbar mit der ersten Führungsschiene verbundene Spindel überträgt, so dass die zweite, untere Führungsschiene, die über eine Spindelmutter mit der Spindel in Eingriff steht, relativ zur ersten Führungsschiene bewegt wird. Durch die Relativbewegung der ersten und zweiten Führungsschienen kann ein beispielsweise mit der ersten Führungsschiene verbundenes Sitzteil eines Fahrzeugsitzes in der durch die Führungsschienen definierten Längsrichtung verstellt werden.

Bei einem aus der DE 103 37 475 A1 bekannten Verstellgetriebe sind in einem Getriebegehäuse eine sich in Längsrichtung erstreckende, auf einer Spindel einer Verstelleinrichtung anzuordnende Spindelmutter und eine sich quer zur Längsrichtung erstreckende Antriebsschnecke gelagert. Das Getriebegehäuse ist in zwei symmetrische Gehäusehälften geteilt, die zusammengefügt werden können und in zusammengefügtem Zustand die Spindelmutter und die Antriebsschnecke einfassen. Die Antriebsschnecke weist ein Außengewinde auf, das über eine Außenverzahnung an der Spindelmutter mit der Spindelmutter in Eingriff steht und im Betrieb des Verstellgetriebes die Spindelmutter antreibt.

Bei dem Verstellgetriebe der DE 103 37 475 A1 sind die Spindelmutter und die Antriebsschnecke jeweils in Lagerstellen im Getriebegehäuse gelagert. Abhängig von der Ausbildung der Lagerstellen können sowohl die Spindelmutter als auch die Antriebsschnecke hierbei ein gewisses Spiel relativ zum Getriebegehäuse aufweisen, das durch Toleranzen in der Ausbildung des Getriebegehäuses und/oder der Spindelmutter oder der Antriebsschnecke bedingt und nachteilig im Betrieb des Verstellgetriebes ist. Weist insbesondere die Spindelmutter ein Spiel in Längsrichtung, die der axialen Richtung der mit der Spindelmutter im Betrieb zusammenwirkenden Spindel entspricht, auf, so führt dies zu einer ungenügenden Lagerung des durch das Verstellgetriebe zu verstellenden Verstellteils, beispielsweise eines Fahrzeugsitzes, der in diesem Fall spielbehaftet durch das Verstellgetriebe gehalten wird und sich im Betrieb des Fahrzeugs, insbesondere bei einer Lastumkehr des Fahrzeugs (Bremsen, Anfahren) relativ zum Verstellgetriebe und somit zur Verstelleinrichtung bewegen kann. Dieses ist zum einen für einen Sitzinsassen unangenehm und führt zum zweiten zu einer Geräuschentwicklung (Klappern).

Im Betrieb des Verstellgetriebes kann es bei Richtungsänderungen der Verstelleinrichtungen, also bei einem Wechsel der Bewegungsrichtung während des Verstellens, bedingt durch eine spielbehaftete Lagerung der Antriebsschnecke im Getriebegehäuse und das Anschlagen der Antriebsschnecke an die eine oder andere Seite des Getriebegehäuses ebenfalls zu einer ungewünschten Geräuschentwicklung kommen.

Darüber hinaus ist die Montage des aus zwei Gehäusehälften und vier Lagerplatten zur Lagerung der Antriebsschnecke der Spindelmutter zusammengesetzten Verstellgetriebes aufwändig, insbesondere unter Berücksichtigung der vorstehend genannten Probleme hinsichtlich des Lagerspiels und der daraus resultierenden Geräuschentwicklungen und mangelhaften Einstellung der relativ zueinander beweglichen Verstellteile der Verstelleinrichtung, die ein aufwändiges Positionieren der Lagerstellen zu den Verzahnungselementen erfordern.

Aus der gattungsgemäβen EP 1 645 458 A1 ist ein Getriebe zum Verstellen zweier zueinander verstellbarer Teile bekannt, von denen das erste der Teile eine drehfeste Spindel oder eine feste Zahnstange aufweist. Das Getriebe enthält ein mit dem zweiten der Teile in dessen Verstellrichtung verstellfest verbindbares Getriebegehäuse zur Aufnahme einer antreibbaren Schnecke und eines mit der Schnecke in Eingriff stehenden Schneckenrades, das eine durch eine innenseitige Verzahnung des hohlen Schneckenradschaftes ausgebildete Spindelmutter zum Antreiben der Spindel oder einer Schnecke zum Antreiben der Zahnstange aufweist.

Das Getriebegehäuse besteht aus einem Oberteil, das einen Schneckenraum mit zwei zueinander gegenüberliegenden Seitenwänden aufweist, in denen teilzylindrische Schneckenlager zur Lagerung der Schnecke ausgebildet sind. Die in die Schneckenlager eingesetzte Schnecke wird mit dem in das Getriebegehäuse eingesetzten Schneckenrad gehalten und zur offenen Seite der teilzylindrischen Schneckenlager abgestützt. Das mit seiner Drehachse senkrecht zur Drehachse der Schnecke ausgerichtete Schneckenrad wird in einem unterhalb des Schneckenraumes angeordneten Schneckenradraum mit zwei zueinander gegenüberliegenden Seitenwänden, in denen jeweils ein teilzylindrisches Schneckenradlager ausgebildet ist, eingesetzt.

Zur Abstützung des Schneckenrades im Getriebegehäuse ist der Abstand der Wandungen zweier Schneckenradlager-Zugangsöffnungen geringfügig kleiner als der Außendurchmesser des Schneckenradschaftes, so dass der Schneckenradschaft entgegen der elastischen Kraft durch die Schneckenradlager-Zugangsöffnungen in die Schneckenradlager eingeschoben werden kann und nach dem Erreichen des Schneckenradlagers durch die zurückgestellten Wandungen in den Schneckenradlagern gelagert wird. Alternativ wird ein Gehäusedeckel als Gehäuseverschlussteil in das Getriebegehäuse eingesetzt und mit diesem verbunden, wobei die oberseitige Wandung des Gehäuseverschlussteils derart gerundet ausgebildet ist, dass der Schneckenradraum einen ausreichenden Raum für die Schneckenradverzahnung bildet und die Enden des Schneckenradschaftes auf entsprechend geformten Lagerflächen lagern.

Sowohl die Schneckenlager zur Lagerung der Schnecke als auch die Schneckenradlager zur Lagerung des Schneckenrades weisen jedoch durch den Abstand der Seitenwände des Getriebegehäuses vorgegebene feste Abstände zueinander auf.

Aus der WO 99/11502 ist eine Vorrichtung zur Beseitigung des Spiels beim Verzahnungseingriff zwischen einer Schnecke und einem Schneckenrad eines elektromotorisch betriebenen Schneckengetriebes bekannt, das ein Getriebegehäuse aufweist, in dem das Schneckenrad befestigt und die Schneckenwelle über zwei Lager mit dem Getriebegehäuse verbunden ist. Das erste Lager ist in einer von außen zugänglichen Öffnung des Getriebegehäuses angeordnet und weist eine exzentrische Lagerbuchse mit zylinderförmiger, in die Gehäuseöffnung eingesetzter Außenfläche und einem endseitigen Flansch sowie ein die Schneckenwelle aufnehmendes Kugellager auf. Das zweite Lager ist winkelbeweglich ausgebildet.

Durch Drehung des ersten Lagers wird die Schneckenwelle infolge der Exzentrizität der Lagerbuchse angehoben oder abgesenkt und dadurch der Achsabstand zwischen der Schnecke und dem Schneckenrad zum Einstellen des Spiels bzw. Abstands der Verzahnungen der Schnecke und des Schneckenrades verändert. Beide Lager sind in axialer Richtung fest in dem Getriebegehäuse positioniert und die Kugellager axial in miteinander in Eingriff tretenden Nuten am Außenumfang der Kugellager und umlaufenden Stegen in den Lagerbuchsen festgelegt.

Aus der DE 103 08 028 ist ein Spindelgetriebe mit einem zweiteiligen Gehäuse zur Aufnahme einer Schnecke und eines Schneckenrades bekannt, das Lagerbereiche für die Schnecke und das Schneckenrad ausbildet. Die Lagerflächen enthalten Lagerrillen zur Aufnahme eines äußeren Randes von Lagerbuchsen, die drehfest in die Lagerflächen eingesetzt werden und beidseitig der Verzahnungen der Schnecke und des Schneckenrades ausgebildete äußere Lagerflächen aufnehmen. Infolge der in dem einen Gehäuseteil angeordneten Lagerrillen zur Aufnahme des äußeren Randes der Lagerbuchsen ist ein fester axialer Abstand zwischen den Lagern der Schnecke und des Schneckenrades vorgegeben.

Der vorliegenden Erfindung liegt die Aufgabenstellung zugrunde, ein mit einfachen Mitteln und leichter Montage herzustellendes Verstellgetriebe zur Verfügung zu stellen, das eine im Wesentlichen spielfreie Lagerung eines mit einer Antriebseinrichtung verbundenen Antriebsrades, beispielsweise einer Antriebsschnecke, und eines Abtriebsrades, beispielsweise einer Spindelmutter oder eines Schraubrades, gewährleistet.

Diese Aufgabe wird durch ein Verstellgetriebe mit den Merkmalen des Anspruchs 1 gelöst.

Erfindungsgemäß weist das Verstellgetriebe ein einteiliges Getriebegehäuse mit einer ersten Gehäusekammer zur Aufnahme eines Antriebsrades mit beidseitig des Antriebsrades ausgebildeten Lagerbünden und einer zweiten Gehäusekammer zur Aufnahme eines mit dem Antriebsrad kämmenden Abtriebsrades, dessen Achse im Wesentlichen senkrecht zur Achse des Antriebsrades ausgerichtet ist und das beidseitig des Abtriebsrades Lagerbünde aufweist, wobei in der ersten Gehäusekammer eine Lagerstelle zur Aufnahme eines ersten Lagerbundes es Antriebsrades und in der zweiten Gehäusekammer eine Lagerstelle zur Aufnahme eines ersten Lagerbundes des Abtriebsrades ausgebildet und axial verstellbare und mit den Gehäusekammern verbindbare Lagerbuchsen mit den Innendurchmessern der Gehäusekammern angepassten zylinderförmigen Buchsen zum Zentrieren der zweiten Lagerbünde des Antriebsrades und des Abtriebsrades vorgesehen sind.

Das erfindungsgemäße Verstellgetriebe gewährleistet bei einfacher Herstellung und Montage eine spielfreie Anordnung des Antriebsrades bzw. der Antriebsschnecke und des Abtriebsrades bzw. der Spindelmutter oder des Schraubrades in einem einteiligen Getriebegehäuse mit an den einen Enden der Gehäusekammern angeformten Lagerstellen zur Aufnahme der einen Lagerbünde des Antriebs- und Abtriebsrades, so dass die Gehäusekammern eine Kessel- oder Topfform mit Zentrierbohrung zur Aufnahme der einen Lagerbünde des Antriebs- und Abtriebsrades aufweisen.

Durch die Zuordnung der sich in X- und Y-Richtung, das heißt senkrecht zueinander erstreckenden Gehäusekammern in Z-Richtung des Kraftfahrzeugs mit im Schnittbereich vorgesehener Öffnung ist ein radial spielfreier Verzahnungseingriff zwischen dem Antriebsrad und dem Abtriebsrad gewährleistet, während die die anderen Lagerbünde des Antriebsrades und des Abtriebsrades aufnehmenden und zentrierenden Lagerbuchsen axial so positioniert und mit der Stirnwand der jeweiligen Gehäusekammer verbunden werden, dass kein axiales Lagerspiel auftritt.

Unter spielfrei wird in diesem Zusammenhang verstanden, dass das Spiel in axialer Richtung zwischen dem Antriebsrad bzw. einer Antriebsschnecke und dem Getriebegehäuse und zwischen dem Abtriebsrad bzw. einer Spindelmutter oder einem Schraubrad und dem Getriebegehäuse minimiert bzw. eliminiert ist. Das Antriebsrad (Antriebsschnecke) und das Abtriebsrad (Spindelmutter oder Schraubrad) werden axial spielfrei im Getriebegehäuse festgesetzt, sind aber gleichzeitig frei um ihre Achse drehbar. Unter spielfrei kann in diesem Zusammenhang auch verstanden werden, dass das Spiel während der Montage in gewünschter, definierter Weise eingestellt wird.

Der wesentliche Vorteil des erfindungsgemäßen Verfahrens besteht darin, dass durch die Vorgabe der einen Lagerstelle für die einen Lagerbünde des Antriebsrades und Abtriebsrades das axiale Spiel des Antriebsrades und des Abtriebsrades allein durch die axiale Positionierung der die anderen Lagerbünde aufnehmenden Lagerbuchsen eingestellt und dadurch eliminiert wird. Der durch den Abstand der Gehäusekammern des einteiligen Getriebegehäuses in Z-Richtung bestimmte Verzahnungseingriff des Antriebsrades und des Abtriebsrades gewährleistet, dass der Achsabstand in Vertikalrichtung zwischen der Spindelmutter bzw. dem Schraubrad und der Antriebsschnecke minimiert oder auf gewünschte Weise eingestellt wird.

Die erfindungsgemäße Lösung ermöglicht somit insgesamt eine kurze Toleranzkette sowie einen in den Montageprozess integrierbaren Spielausgleich für alle Verzahnteile des Verstellgetriebes.

In bevorzugter Ausführungsform weisen die axial verstellbaren Lagerbuchsen einen an die zylinderförmigen, das Antriebsrad und das Abtriebsrad zentrierenden Buchsen anschließenden Flansch auf, der im montierten Zustand des Verstellgetriebes an den Stirnseiten der Gehäusekammern anliegt.

In dieser Ausführungsform ermöglichen die zylinderförmigen Buchsen die Zentrierung des Antriebs- und Abtriebsrades sowie in axialer Richtung den Spielausgleich, während der an die zylinderförmigen Buchsen anschließende Flansch nach der Montage der Lagerbuchsen zum Fixieren der Lagerbuchsen an den Gehäusekammern des Getriebegehäuse dient, wobei die Verbindung der axial verstellbaren Lagerbuchsen mit den Gehäusekammern vorzugsweise stoffschlüssig, insbesondere durch eine Klebe- oder Schweißverbindung erfolgt.

In weiterer Ausgestaltung weisen die axial verstellbaren Lagerbuchsen eine Gewindestruktur auf, die zur Erzielung einer größeren Verbindungsfläche insbesondere für eine Klebeverbindung mit den Gehäusekammern und einer Erhöhung der Aufnahme von Axialkräften dient.

In einer ersten Ausgestaltung des Verstellgetriebes besteht das Antriebsrad aus einer Antriebsschnecke, die über eine Antriebswelle mit einer Antriebseinrichtung verbunden ist, während das Abtriebsrad als Spindelmutter ausgebildet ist, deren Außenverzahnung mit der Antriebsschnecke kämmt und die eine sich in axialer Richtung erstreckende innere Bohrung aufweist, die mit einer Innenverzahnung in Form eines Schneckengewindes versehen ist, das mit einer Spindel derart in Eingriff steht, dass die von der Antriebsschnecke angetriebene Spindelmutter auf der Spindel abrollt und sich entlang der Spindel bewegt.

Diese Ausführungsform wird in bevorzugter Anwendung für eine Verstelleinrichtung zur Verstellung von Sitzteilen eines Kraftfahrzeugsitzes mit zwei relativ zueinander verstellbaren Führungsschienen eingesetzt, von denen die eine Führungsschiene mit dem die Spindelmutter aufweisenden Verstellgetriebe verbunden ist, während an der anderen Führungsschiene die mit der Spindelmutter des Verstellgetriebes in Wirkverbindung stehende Spindel gelagert ist.

In einer zweiten, als "Front-Drive-Unit" bezeichneten Ausführungsform besteht das Antriebsrad aus einer Antriebsschnecke, die über eine Antriebswelle mit einer Antriebseinrichtung verbunden ist, während das Abtriebsrad als Schraubrad ausgebildet ist, das fest mit einer drehbar an einem ersten Verstellteil der Verstelleinrichtung gelagerten Spindel verbunden ist und bei einer Betätigung der Antriebseinrichtung die Spindel dreht und ein relativ zum ersten Verstellteil der Verstelleinrichtung verstellbares zweites Verstellteil mit einer mit der Spindel kämmenden Spindelmutter verbunden ist, die auf der durch das Verstellgetriebe in eine Drehbewegung versetzten Spindel derart abrollt, dass das erste Verstellteil der Verstelleinrichtung relativ zum zweiten Verstellteil der Verstelleinrichtung verstellt wird.

Diese Ausführungsform wird vorzugsweise in einer Verstelleinrichtung zur Verstellung von Sitzteilen eines Kraftfahrzeugsitzes mit zwei relativ zueinander verstellbaren Führungsschienen eingesetzt, von denen die eine Führungsschiene mit dem das Schraubrad enthaltenden Verstellgetriebe verbunden ist und die mit dem Schraubrad fest verbundene Spindel lagert, während die andere Führungsschiene mit einer mit der Spindel kämmenden Spindelmutter verbunden ist, die bei einer Betätigung der Antriebseinrichtung und der dadurch in eine Drehbewegung versetzten Spindel entlang der Spindel bewegt wird.

In beiden Ausführungsformen weist die Spindelmutter oder das Schraubrad eine in Längsrichtung der Spindel verlaufende zylindrische Kontur mit einer als Zylindermantel ausgebildeten Außenfläche auf, in die die in radialer Richtung senkrecht zur Längserstreckung der Spindelmutter oder des Schraubrades nach innen in die Spindelmutter oder das Schraubrad eingeformte Außenverzahnung der Spindelmutter oder des Schraubrades eingearbeitet ist, an die in axialer Richtung angrenzend verzahnungsfreie Abschnitte ausgebildet sind, an die sich axial jeweils ein Lagerbund (61, 62) anschließt.

Durch die Ausbildung von zwei senkrecht zueinander ausgerichteten zylinderförmigen Gehäusekammern im Getriebegehäuse, von denen die erste Gehäusekammer die Antriebsschnecke aufnimmt, in Y-Richtung des Kraftfahrzeugs ausgerichtet und oberhalb der die Spindelmutter oder das Schraubrad aufnehmenden und in X-Richtung des Kraftfahrzeugs ausgerichteten zweiten Gehäusekammer angeordnet ist, wobei innerhalb einer im Bereich der Schnittstelle zwischen den Gehäusekammern vorgesehenen Öffnung die Verzahnungen der Antriebsschnecke und der Spindelmutter bzw. des Schraubrades miteinander kämmen, bestimmt der Abstand zwischen der ersten und zweiten Gehäusekammer in Z-Richtung des Kraftfahrzeugs den Verzahnungseingriff der als Schneckenverzahnungen ausgebildeten Verzahnungen der Antriebsschnecke und der Spindelmutter bzw. des Schraubrades, so dass durch die Geometrie des Getriebegehäuses gewährleistet wird, dass die Antriebsschnecke und die Spindelmutter bzw. das Schraubrad im Wesentlichen spielfrei miteinander kämmen.

Durch diese Ausführung des Getriebegehäuses wird nicht nur der Verzahnungseingriff der Antriebsschnecke und der Spindelmutter bzw. des Schraubrades in definierter Weise festgelegt und damit die erforderliche Spielfreiheit erzeugt, sondern gleichzeitig die Montage wesentlich vereinfacht und durch die Ausbildung der Lagerstellen an den einen Stirnseiten der Gehäusekammern sowie durch die Festlegung der Lagerbuchsen an den anderen Stirnseiten der Gehäusekammern sichergestellt, dass auch über einen längeren Gebrauch eine Zentrierung der Antriebsschnecke und der Spindelmutter bzw. des Schraubrades und damit ein einwandfreier, spielfreier Verzahnungseingriff erhalten bleibt.

Zur Verbindung des Getriebegehäuses mit einem Verstellteil der Verstelleinrichtung ist ein dritte, rohrförmige Gehäusekammer vorgesehen, die einen mit dem einen Verstellteil der Verstelleinrichtung verbundenen Verbindungsbolzen aufnimmt und vorzugsweise neben der ersten Gehäusekammer angeordnet und parallel zu dieser ausgerichtet ist.

Zur Erhöhung der Stabilität des Getriebegehäuses ist eine die erste Gehäusekammer und die dritte, rohrförmige Gehäusekammer umgebende, im Wesentlichen in X-Richtung ausgerichtete und zu den Enden der zweiten Gehäusekammer führende Verstärkungsrippe vorgesehen.

Zur Erzielung minimaler äußerer Abmessungen sind die Seiten der zweiten Gehäusekammer bündig mit dem Ende der ersten und dritten Gehäusekammer fluchtend abgeflacht.

Die Herstellung des Getriebegehäuses aus Kunststoff gewährleistet zum einen ein geringes Gewicht des Verstellgetriebes und erleichtert zum anderen die Herstellung des Getriebegehäuses entweder durch eine Verbindung der Gehäusekammern und der mit der ersten und zweiten Gehäusekammer verbundenen, an den einen Stirnseiten der ersten und zweiten Gehäusekammer ausgebildeten Lagerstellen mittels Kleben, Reibschweißen, Laserschweißen oder Laserabschmelzschweißen oder alternativ durch Druck- oder Spritzgießen des Kunststoffs.

Ein Verfahren zur Montage des Verstellgetriebes ist dadurch gekennzeichnet, dass
- ein einteiliges Getriebegehäuse mit zwei senkrecht zueinander ausgerichteten, zylinderförmigen Gehäusekammern mit an den einen Stirnseiten ausgebildeten Lagerstellen mit einer zentrischen Bohrung durch Druck- oder Spritzgießen eines Kunststoffes oder durch eine Verbindung der Gehäusekammern mittels Laserschweißen, Ultraschallschweißen, Vibrationsschweißen, Verkleben, Heißverprägen oder Schweißen mit induktiver Erwärmung hergestellt wird,
- ein erster Lagerbund einer Antriebsschnecke in die Lagerstelle der ersten Gehäusekammer und eine erster Lagerbund einer Spindelmutter oder eines Schraubrades in die Lagerstelle der zweiten Gehäusekammer eingesteckt werden,
- eine erste Lagerbuchse mit dem Innendurchmesser der ersten Gehäusekammer angepasster zylinderförmiger Buchse zum Zentrieren des zweiten Lagerbundes der Antriebsschnecke und eine zweite Lagerbuchse mit dem Innendurchmesser der zweiten Gehäusekammer angepasster zylinderförmiger Buchse zum Zentrieren des zweiten Lagerbundes der Spindelmutter oder des Schraubrades in die erste und zweite Gehäusekammer eingesetzt und auf den zweiten Lagerbund der Antriebsschnecke bzw. der Spindelmutter oder des Schraubrades bis zur spielfreien Lagerung der Antriebsschnecke bzw. der Spindelmutter oder des Schraubrades aufgesteckt werden
- und die erste und zweite Lagerbuchse mit der ersten und zweiten Gehäusekammer durch Laserschweißen, Ultraschallschweißen, Vibrationsschweißen, Verkleben, Heißverprägen oder Schweißen mit induktiver Erwärmung verbunden werden.

Der Gegenstand der Erfindung und der der Erfindung zugrunde liegende Gedanke sollen nachfolgend anhand eines in der Zeichnung dargestellten Ausführungsbeispieles näher erläutert werden. Es zeigen:
- Fig. 1: ein Verstellgetriebe für eine Verstelleinrichtung zur Einstellung eines Verstellteils in einem Kraftfahrzeug in einer Explosionsdarstellung,
- Fig. 2: eine schematisch-perspektivische Ansicht des montierten Verstellgetriebes gemäß Fig. 1 und
- Fig. 3: eine perspektivische Explosionsdarstellung einer Verstelleinrichtung mit einem Verstellgetriebe.

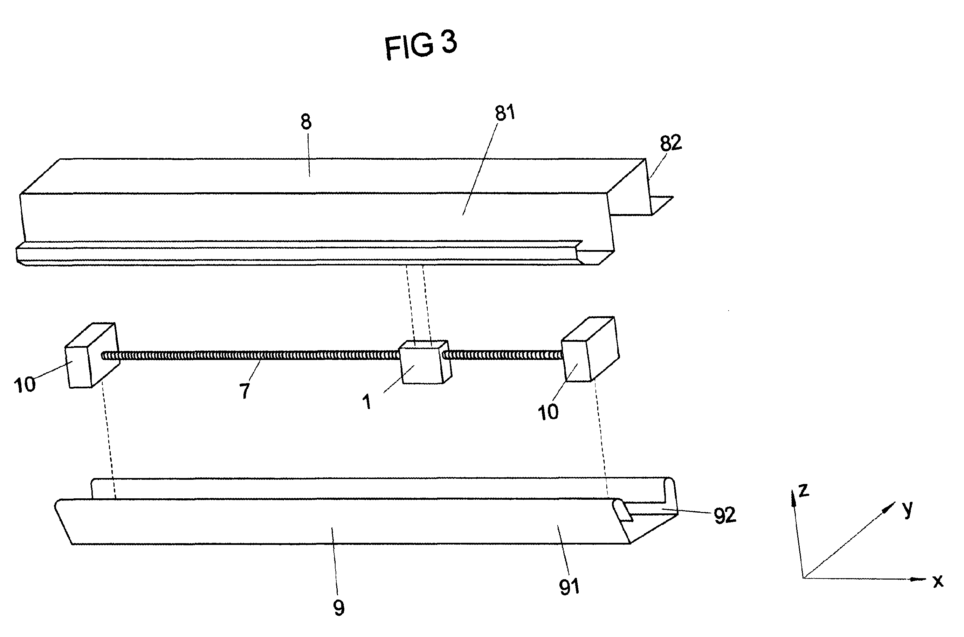

Fig. 3 zeigt eine Verstelleinrichtung zur Verstellung eines Verstellteils, beispielsweise eines Sitzteils eines Kraftfahrzeugsitzes. Die Verstelleinrichtung weist eine erste Führungsschiene 8 und eine zweite Führungsschiene 9 sowie einen Spindelantrieb auf, der durch eine Spindel 7 und ein Verstellgetriebe 1 ausgebildet ist. Das Verstellteil kann hierbei mit der ersten Führungsschiene 8 verbunden sein und wird durch eine Bewegung der ersten Führungsschiene 8 relativ zur zweiten Führungsschiene 9 durch den Spindelantrieb bewegt.

Bei dem in Fig. 3 dargestellten Spindelantrieb ist das Verstellgetriebe 1 an der ersten Führungsschiene 8 angeordnet, steht mit der Spindel 7 in Eingriff und bewegt sich während des Verstellens zusammen mit der ersten Führungsschiene 8 entlang der Spindel 7, die über Befestigungsblöcke 10 drehfest mit der zweiten Führungsschiene 9 verbunden ist. Die Spindel 7 weist ein Außengewinde auf, das mit einem Innengewinde einer Spindelmutter des Verstellgetriebes 1 zusammenwirkt und eine Drehbewegung der Spindelmutter in eine Längsbewegung des Verstellgetriebes 1 entlang der Spindel 7 und damit der mit dem Verstellgetriebe 1 verbundenen ersten Führungsschiene 8 relativ zur zweiten Führungsschiene 9 überträgt.

Alternativ kann die Verstelleinrichtung als so genannte "Front-Drive-Unit" ausgebildet werden, bei der anstelle der Spindelmutter ein Schraubrad vorgesehen ist, das fest mit einer drehbar an der ersten Führungsschiene 8 angeordneten Spindel 7 verbunden ist und die Spindel 7 in eine Drehbewegung versetzt. An der zweiten Führungsschiene 9 ist in diesem Fall eine Spindelmutter angeordnet, die auf der durch das Verstellgetriebe 1 in eine Drehbewegung versetzten Spindel 7 abrollt und somit bewirkt, dass die erste Führungsschiene 8 relativ zur zweiten Führungsscheine 9 verstellt wird. Bei einer solchen Ausgestaltung ist die Spindel 7 somit drehbar mit der ersten Führungsschiene 8 verbunden und wird durch das Schraubrad des Verstellgetriebes 1 angetrieben, während eine Spindelmutter drehfest an der zweiten Führungsschiene 9 angeordnet ist.

Die erste Führungsschiene 8 und die zweite Führungsschiene 9 sind jeweils U-förmig im Querschnitt senkrecht zu ihrer Längserstreckungsrichtung ausgebildet, wobei die erste Führungsschiene 8 an den Kanten der Schenkel 81, 82 nach außen und die zweite Führungsschiene 9 an den Kanten ihrer Schenkel 91, 92 nach innen derart umgebogen sind, dass die erste Führungsschiene 8 beispielsweise über Rollkörper gleitend in Längsrichtung, die im montierten Zustand mit der X-Richtung eines Kraftfahrzeugs korrespondiert, in der zweiten Führungsschiene 9 gelagert ist und entlang der zweiten Führungsschiene 9 geführt wird. Das an der ersten Führungsschiene 8 angeordnete Verstellgetriebe 1 bewegt sich zur Verstellung der ersten Führungsschiene 8 relativ zur zweiten Führungsschiene 9 entlang der Spindel 7.

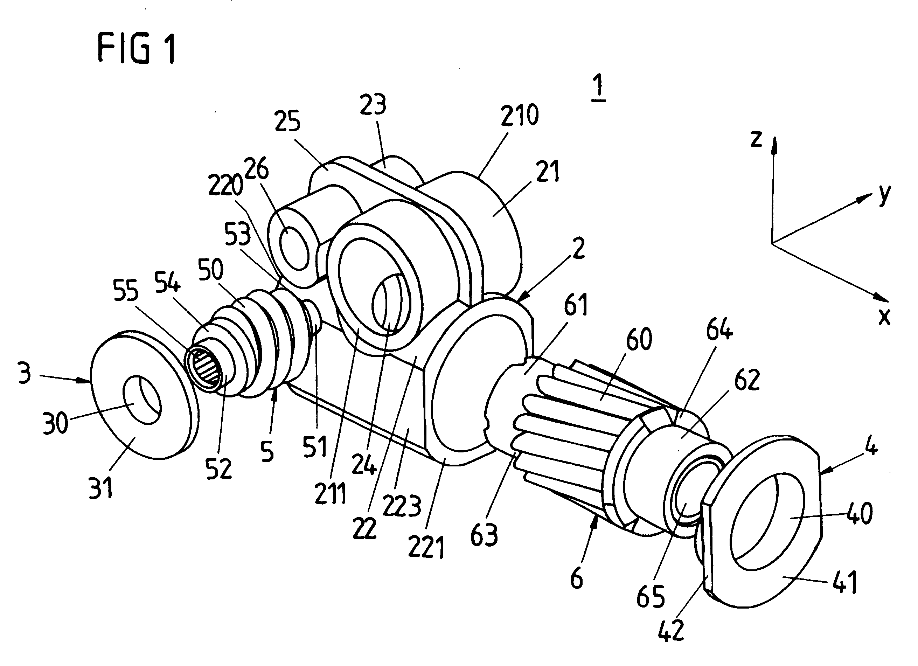

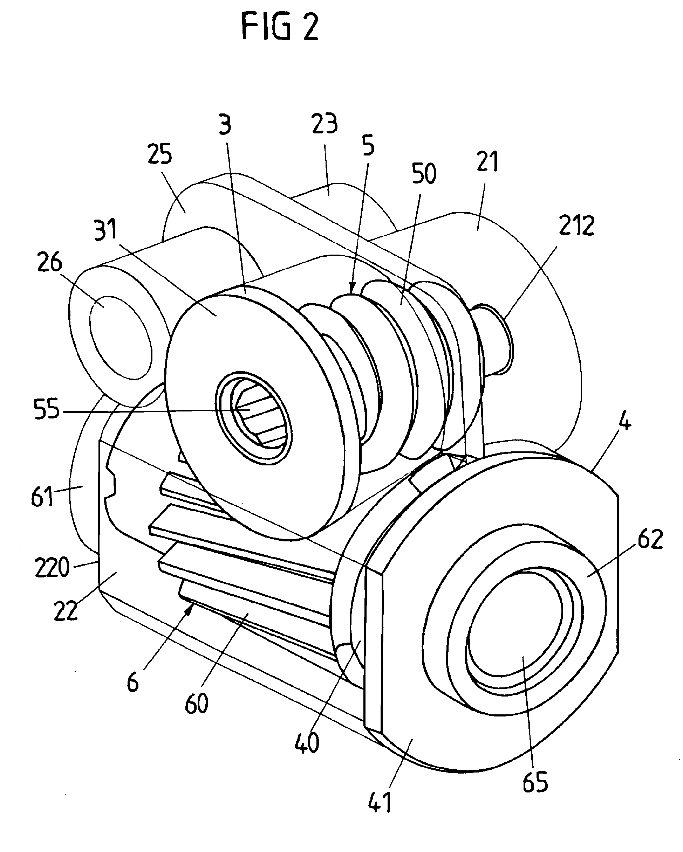

Das in Fig. 1 in einer Explosionsdarstellung und in Fig. 2 im montierten Zustand dargestellte Verstellgetriebe 1 weist ein einteiliges Getriebegehäuse 2 mit zwei senkrecht zueinander ausgerichteten und übereinander angeordneten zylinderförmigen Gehäusekammern 21, 22 auf. Für den Einsatz in einer Verstelleinrichtung zur Verstellung eines Sitzteils eines Fahrzeugsitzes mit zwei ineinander geführten und relativ zueinander beweglichen Führungsschienen 8, 9 entsprechend der Prinzipdarstellung der Fig. 3 wird das einteilige Getriebegehäuse 2 so mit der ersten Führungsschiene 8 verbunden, dass die erste Gehäusekammer 21 in Y-Richtung des Kraftfahrzeugs und die zweite Gehäusekammer 22 mit der Spindel 7 gemäß Fig. 3 fluchtend in X-Richtung des Kraftfahrzeugs ausgerichtet ist.

An der einen Stirnseite 210 der ersten Gehäusekammer 21 und der einen Stirnseite 220 der zweiten Gehäusekammer 22 sind Lagerstellen mit einer Zentrieröffnung vorgesehen, von denen in Fig. 2 die Lagerstelle mit Zentrieröffnung 212 der ersten Gehäusekammer 21 zu erkennen ist. Die Lagerstellen mit Zentrieröffnung sind beispielsweise als Bohrung oder Zylinderbuchse an den einen Stirnseiten 210, 220 der ersten und zweiten Gehäusekammer 21, 22 ausgebildet oder bestehen aus Zylinderbuchsen, die über strahlenförmig von den Lagerbuchsen ausgehende Speichen mit der zylinderförmigen Wand der ersten und zweiten Gehäusekammer 21, 22 verbunden sind. Dadurch ergibt sich eine Kessel- oder Topfform der Gehäusekammern 21, 22 mit einer Zentrierbohrung zur Aufnahme von Lagerbünden eines Antriebs- und Abtriebsrades.

Der Abstand der Mittelängsachse der ersten Gehäusekammer 21 von der Mittelängsachse der zweiten Gehäusekammer 22 in Z-Richtung ist geringer als die Summe der Innenradien der beiden Gehäusekammern 21, 22, so dass sich eine Schnittfläche ergibt, in der eine Öffnung 24 zwischen den beiden Gehäusekammern 21, 22 ausgebildet ist.

Weiterhin weist das einteilige Getriebegehäuse 2 eine dritte, rohrförmige Gehäusekammer 23 auf, durch die ein Verbindungsbolzen steckbar und mit dem einen Verstellteil, beispielsweise der ersten Führungsschiene 8 gemäß Fig. 3 fest verbunden wird. Zur Erhöhung der Stabilität des einteiligen Getriebegehäuses 2 ist eine die erste und dritte Gehäusekammer 21, 23 einfassende, in X-Richtung ausgerichtete und an der zweiten Gehäusekammer 22 endende Verstärkungsrippe 25 vorgesehen, die der Stabilisierung des Getriebegehäuses 2 für die Aufnahme von Verstellkräften dient, insbesondere, wenn das einteilige Getriebegehäuse 2 aus einem Kunststoff im Druck- oder Spritzgießverfahren hergestellt ist.

In die erste Gehäusekammer 21 wird gemäß Fig. 1 eine Antriebsschnecke 5 eingesetzt, die eine Bohrung 55 zur Verbindung mit einer Antriebswelle einer vorzugsweise elektromotorischen Antriebseinrichtung, eine Schneckenverzahnung 50, zwei an die Schneckenverzahnung 50 angrenzende verzahnungsfreie Abschnitte 53, 54 und daran angrenzende Lagerbünde 51, 52 aufweist, die eine als Zylindermantel geformte Außenfläche aufweisen, wobei der Außendurchmesser der Lagerbünde 51, 52 kleiner ist als der Durchmesser der verzahnungsfreien Abschnitte 53, 54, so dass sich in Längsrichtung ein stufenförmiges Profil der Antriebsschnecke 5 ergibt.

In die zweite Gehäusekammer 22 wird ein Schraubrad 6 mit einer Längsbohrung 65 eingesetzt, in die eine Spindel 7 gemäß Fig. 3 eingesteckt und fest mit dem Schraubrad 6 verbunden wird. Das Schraubrad 6 weist eine Außenverzahnung 60 auf, die im Bereich der Öffnung 24 zwischen den beiden Gehäusekammern 21, 22 mit der Schneckenverzahnung 50 der Antriebsschnecke 5 kämmt. Die Außenverzahnung 60 geht beidseitig in verzahnungsfreie Abschnitte 63, 64 über, an die sich zwei Lagerbünde 61, 62 anschließen, die eine als Zylindermantel geformte Außenfläche aufweisen, wobei der Außendurchmesser der Lagerbünde 61, 62 kleiner ist als der Durchmesser der verzahnungsfreien Abschnitte 63, 64, so dass sich in Längsrichtung ein stufenförmiges Profil des Schraubrades 6 ergibt.

Der Abstand zwischen der ersten Gehäusekammer 21 und der zweiten Gehäusekammer 22 in Z-Richtung und damit der Abstand der Längsachsen der Antriebsschnecke 5 und des Schraubrades 6 in Relation zur Ausbildung der Schneckenverzahnung 50 und der Außenverzahnung 60 ist so bemessen, dass die Schneckenverzahnung 50 der Antriebsschnecke 5 spielfrei mit der Außenverzahnung 60 des Schraubrades 6 kämmt.

Alternativ zu einem fest mit der Spindel 7 verbundenen Schraubrad 6 kann eine Spindelmutter vorgesehen werden, die eine sich in Längsrichtung erstreckende innere Bohrung 65 aufweist, die mit einer Innenverzahnung in Form eines Schneckengewindes versehen ist und im Betrieb des Verstellgetriebes 1 mit der Spindel 7 (Fig. 3) in Eingriff steht. Über die Innenverzahnung in der Bohrung 65 rollt die Spindelmutter 6 angetrieben über die Antriebsschnecke 5 auf der Spindel 7 ab, bewegt sich entlang der Spindel 7 und bewirkt dadurch eine Relativbewegung zwischen dem mit dem einen Verstellteil verbundenen Verstellgetriebe 1 und der mit dem anderen Verstellteil verbundenen Spindel 7.

Die zur Aufnahme jeweils eines ersten Lagerbundes 51 der Antriebsschnecke 5 bzw. eines ersten Lagerbundes 61 des Schraubrades 6 dienenden Lagerstellen an den einen Stirnseiten 210, 220 der beiden Gehäusekammern 21, 22 sind so bemessen, dass beide Lagerbünde 51, 61 spielfrei, aber ohne Behinderung einer Drehbewegung der Antriebsschnecke 5 und des Schraubrades 6 in den Lagerstellen gelagert sind.

Um einen zuverlässigen Betrieb zu gewährleisten und eine unerwünschte Geräuschentwicklung im Betrieb des Verstellgetriebes 1 zu vermeiden, ist es wesentlich, dass sowohl die Antriebsschnecke 5 als auch die Spindelmutter oder das Schraubrad 6 sowohl radial als auch axial spielfrei in dem Getriebegehäuse 2 gelagert sind. Insbesondere ist es hierbei von Bedeutung, das Spiel der Spindelmutter oder des Schraubrades 6 in Längsrichtung (X-Richtung des Kraftfahrzeugs) zu minimieren, um eine Relativbewegung der Führungsschienen 8, 9 zueinander insbesondere bei einer Lastumkehr (Bremsen oder Anfahren) des Fahrzeugs und daraus resultierende Klappergeräusche zu vermeiden. Darüber hinaus ist auch das Spiel der Antriebsschnecke 5 in ihrer axialen Richtung weitestgehend zu unterbinden, um eine Geräuschentwicklung im Betrieb der Verstelleinrichtung, insbesondere beim Umschalten von einer Hin- in eine Rückbewegung, zu verhindern. Eine solche Geräuschentwicklung resultiert daraus, dass bei einem axialen Spiel zwischen der Antriebsschnecke 5 und dem Getriebegehäuse 2 die die Spindelmutter oder das Schraubrad 6 bei Bewegung der Verstelleinrichtung in eine Verstellrichtung (parallel zur Längsrichtung X) an die eine Seite des Getriebegehäuses 2 anschlägt und bei Umkehr der Bewegungsrichtung sich zur anderen Seite des Getriebegehäuses 2 bewegt und an die andere Seite anschlägt.

Bei der Montage des erfindungsgemäßen Verstellgetriebes 1 wird die Antriebsschnecke 5 in die erste Gehäusekammer 21 eingeführt und mit ihrem einen Lagerbund 51 in die an der Stirnseite 28 der ersten Gehäusekammer 21 vorgesehene Lagerstelle 210 eingesetzt bis die Stirnseite des verzahnungsfreien Abschnitts 53 an der Lagerstelle 210 anliegt. In analoger Weise wird das Schraubrad 6 in die zweite Gehäusekammer 22 eingesetzt bis der eine Lagerbund 61 des Schraubrades 6 in die an der einen Stirnseite 220 der zweiten Gehäusekammer 22 vorgesehene Lagerstelle eingreift und mit der inneren Stirnseite des verzahnungsfreien Abschnitte 63 an der Lagerstelle anliegt.

Nach dem Einsetzen der Antriebsschnecke 5 in die erste Gehäusekammer 21 wird eine erste Lagerbuchse 3 in die offene Stirnseite 211 der ersten Gehäusekammer 21 eingesetzt. Die erste Lagerbuchse 3 weist eine zylinderförmige Buchse 30 auf, deren zylindrische Außenfläche dem Innendurchmesser der ersten Gehäusekammer 21 entspricht und deren zylindrische Bohrung dem Außendurchmesser des anderen Lagerbundes 52 der Antriebsschnecke 5 entspricht, so dass die erste Lagerbuchse 3 nach dem Aufstecken auf den anderen Lagerbund 52 der Antriebsschnecke 5 die Antriebsschnecke zur ersten Gehäusekammer 21 zentriert.

Analog wird nach dem Einsetzen des einen Lagerbundes 61 des Schraubrades 6 in die Lagerstelle der zweiten Gehäusekammer 22 eine zweite Lagerbuchse 4 in die offene Stirnseite 221 der zweiten Gehäusekammer 22 eingesetzt. Die zweite Lagerbuchse 4 weist eine zylinderförmige Buchse 40 auf, deren zylindrische Außenfläche dem Innendurchmesser der zweiten Gehäusekammer 22 entspricht und deren zylindrische Bohrung dem Außendurchmesser des anderen Lagerbundes 62 der Spindelmutter oder des Schraubrades 6 entspricht, so dass die zweite Lagerbuchse 4 nach ihrem Einsetzen in die zweite Gehäusekammer 22 und Aufstecken auf den anderen Lagerbund 62 die Spindelmutter oder das Schraubrad 6 zur zweiten Gehäusekammer 22 zentriert.

Die axiale Länge der Lagerbuchsen 3, 4 bzw. der zylinderförmigen Buchsen 30, 40 ist so bemessen, dass eine hinreichende axiale Verschiebung der zylinderförmigen Buchsen 30, 40 in den Gehäusekammern 21, 22 möglich ist, um sowohl die Antriebsschnecke 5 als auch die Spindelmutter oder das Schraubrad 6 in axialer Richtung spielfrei in dem Getriebegehäuse 2 zu lagern.

An den Endseiten der zylinderförmigen Buchsen 30, 40 der Lagerbuchsen 3, 4 sind Flansche 31, 41 ausgebildet, deren Außendurchmesser der Form und dem Außendurchmesser der ersten bzw. zweiten Gehäusekammer 21 bzw. 22 angepasst sind.

Nach dem Einsetzen der Antriebsschnecke 5 in die erste Gehäusekammer 21 bis zur Anlage des verzahnungsfreien Abschnitts 53 der Antriebsschnecke 5 an der ersten Stirnseite 210 der ersten Gehäusekammer 21 mit der Lagerstelle 212 wird die erste Lagerbuchse 3 in die zweite Stirnseite 211 der ersten Gehäusekammer 21 eingesetzt und dabei die zylinderförmige Buchse 30 der ersten Lagerbuchse 3 so weit in Y-Richtung verstellt bis das stirnseitige Ende der zylinderförmigen Buchse 30 an der Stirnseite des verzahnungsfreien Abschnitts 53 der Antriebsschnecke 5 anliegt, so dass kein axiales Spiel der Antriebsschnecke 5 in der ersten Gehäusekammer 21 des Getriebegehäuses 2 gegeben ist, ohne dass dabei die Drehbewegung der Antriebsschnecke 5 behindert wird.

In analoger Weise wird nach dem Einsetzen der Spindelmutter oder des Schraubrades 6 in die zweite Gehäusekammer 22 bis zur Anlage des verzahnungsfreien Abschnitts 63 der Spindelmutter oder des Schraubrades 6 an der ersten Stirnseite 220 der zweiten Gehäusekammer 22 die zweite Lagerbuchse 4 in die zweite Stirnseite 221 der zweiten Gehäusekammer 22 eingesetzt und dabei die zylinderförmige Buchse 40 der zweiten Lagerbuchse 4 so weit in X-Richtung verstellt bis das stirnseitige Ende der zylinderförmigen Buchse 40 an der Stirnseite des verzahnungsfreien Abschnitts 63 der Spindelmutter oder des Schraubrades 6 anliegt, so dass kein axiales Spiel der Spindelmutter oder des Schraubrades 6 in der zweiten Gehäusekammer 22 des Getriebegehäuses 2 gegeben ist, ohne dass die Drehbewegung der Spindelmutter oder des Schraubrades 6 behindert wird.

Nach der entsprechenden Positionierung der Lagerbuchsen 3, 4 werden die Flansche 31, 41 der Lagerbuchsen 3, 4 durch Laserschweißen, Ultraschallschweißen, Vibrationsschweißen, Verkleben, Heißverprägen oder Schweißen mit induktiver Erwärmung mit den zweiten Stirnseiten 211, 221 der ersten und zweiten Gehäusekammer 21, 22 des Getriebegehäuses 2 verbunden und damit eine dauerhafte, spielfreie Lagerung der Antriebsschnecke 5 und der Spindelmutter bzw. des Schraubrades 6 im Getriebegehäuse 2 gewährleistet.

Fig. 2 zeigt das fertig montierte Verstellgetriebe 1 mit axial spielfreier Lagerung der Antriebsschnecke 5 und der Spindelmutter bzw. des Schraubrades 6 sowie spielfreiem Verzahnungseingriff der Verzahnung der Antriebsschnecke 5 in die Verzahnung der Spindelmutter bzw. des Schraubrades 6 durch den axialen Abstand der Mittelängsachse der Antriebsschnecke 5 von der Mittelängsachse der Spindelmutter bzw. des Schraubrades 6 bzw. durch den axialen Abstand der Mittelängsachse der ersten Gehäusekammer 21 von der Mittelängsachse der zweiten Gehäusekammer 22. In dem so montierten Zustand des Verstellgetriebes 1 wird ein Verbindungsbolzen durch die Bohrung 26 der dritten, rohrförmigen Gehäusekammer 23 gesteckt und mit einem der beiden Verstellteile der Verstelleinrichtung verbunden, so dass eine Verbindung des Verstellgetriebes 1 mit dem entsprechenden Verstellteil der Verstelleinrichtung hergestellt wird.

Das in den Fig. 1 und 2 dargestellte Ausführungsbeispiel bezieht sich auf eine Front-Drive-Unit mit einem fest mit einer Spindel verbundenen Schraubrad, wobei die Spindel mit einer Spindelmutter kämmt, die mit dem einen der beiden Verstellteile der Verstelleinrichtung verbunden ist, während die Spindel mit dem Verstellgetriebe mit dem anderen der beiden Verstellteile der Verstelleinrichtung verbunden ist. Alternativ kann anstelle eines Schraubrades eine Spindelmutter vorgesehen werden, deren Innenverzahnung mit der Verzahnung einer Spindel kämmt, die mit dem einen von zwei Verstellteilen einer Verstelleinrichtung verbunden ist, während das Verstellgetriebe mit der Antriebsschnecke und der Spindelmutter über den Verbindungsbolzen mit dem anderen der beiden Verstellteile der Verstelleinrichtung verbunden ist.

Bevorzugt bestehen das Getriebegehäuse 2, die Lagerbuchsen 3, 4, die Antriebsschnecke 5 und die Spindelmutter bzw. das Schraubrad 6 des Verstellgetriebes 1 aus Kunststoff, um eine leichte und kostengünstige Bauform des Verstellgetriebes 2 zu erzielen und die Montage, insbesondere die Einstellung der Spielfreiheit durch axiales Justieren der Lagerbuchsen 3, 4 und deren Verbindung mit den Gehäusekammern 21, 22 zu vereinfachen.

Um die seitlichen Abmessungen des Verstellgetriebes 1 zu minimieren und Anlageflächen an dem einen Verstellteil der Verstelleinrichtung zu ermöglichen, sind die Seiten der zweiten Gehäusekammer 22 abgeflacht und schließen bündig mit den Stirnseiten 210, 211 der ersten Gehäusekammer 21 ab.

### Bezugszeichenliste

- 1: Verstellgetriebe
- 2: einteiliges Getriebegehäuse
- 3: erste Lagerbuchse
- 4: zweite Lagerbuchse
- 5: Antriebsschnecke
- 6: Spindelmutter oder Schraubrad
- 7: Spindel
- 8: erste Führungsschiene
- 9: zweite Führungsschiene
- 10: Befestigungsblöcke
- 21: erste Gehäusekammer
- 22: zweite Gehäusekammer
- 23: dritte, rohrförmige Gehäusekammer
- 24: Öffnung zwischen den Gehäusekammern
- 25: Verstärkungsrippe
- 26: Bohrung
- 30: zylinderförmige Buchse
- 31: Flansch
- 40: zylinderförmige Buchse
- 41: Flansch
- 50: Schneckenverzahnung
- 51, 52: Lagerbünde
- 53, 54: Verzahnungsfreie Abschnitte
- 55: Bohrung
- 60: Außenverzahnung
- 61, 62: Lagerbünde
- 63, 64: verzahnungsfreie Abschnitte
- 65: Längsbohrung
- 81, 82: Schenkel
- 91,92: Schenkel
- 210, 220: Stirnseiten mit Lagerstellen der ersten und zweite Gehäusekammer
- 211, 221: Offene Stirnseiten der ersten und zweiten Gehäusekammer
- 212: Lagerstelle mit Zentrieröffnung

## Patentansprüche

1. Verstellgetriebe für eine Verstelleinrichtung eines Kraftfahrzeugs mit einem einteiligen Getriebegehäuse (2) mit einer ersten Gehäusekammer (21) zur Aufnahme eines Antriebsrades (5) mit beidseitig des Antriebsrades (5) ausgebildeten Lagerbünden (51, 52) und einer zweiten Gehäusekammer (22) zur Aufnahme eines mit dem Antriebsrad (5) kämmenden Abtriebsrades (6), dessen Achse im Wesentlichen senkrecht zur Achse des Antriebsrades (5) ausgerichtet ist und das beidseitig des Abtriebsrades (6) Lagerbünde (61, 62) aufweist, wobei in der ersten Gehäusekammer (21) eine Lagerstelle (212) zur Aufnahme eines ersten Lagerbundes (51) des Antriebsrades (5) und in der zweiten Gehäusekammer (22) eine Lagerstelle (220) zur Aufnahme eines ersten Lagerbundes (61) des Abtriebsrades (6) ausgebildet sind,
**gekennzeichnet durch**
axial verstellbare und mit den Gehäusekammern (21, 22) verbindbare Lagerbuchsen (3, 4) mit den Innendurchmessern der Gehäusekammern (21, 22) angepassten zylinderförmigen Buchsen (30, 40) zum Zentrieren der zweiten Lagerbünde (52, 62) des Antriebsrades (5) und des Abtriebsrades (6).

2. Verstellgetriebe nach Anspruch 1, **dadurch gekennzeichnet, dass** die axial verstellbaren Lagerbuchsen (3, 4) einen an die zylinderförmigen Buchsen (30, 40) anschließenden Flansch (31, 41) aufweisen, der im montierten Zustand des Verstellgetriebes (1) an den offenen Stirnseiten (211, 221) der Gehäusekammern (21, 22) anliegt.

3. Verstellgetriebe nach Anspruch 1 oder 2, **dadurch gekennzeichnet, dass** die axial verstellbaren Lagerbuchsen (3, 4) stoffschlüssig, insbesondere mittels einer Klebe- oder Schweißverbindung, mit den Gehäusekammern (21, 22) verbindbar sind.

4. Verstellgetriebe nach Anspruch 3, **dadurch gekennzeichnet, dass** der Flansch (31, 41) der axial verstellbaren Lagerbuchsen (3, 4) insbesondere mittels Laserschweißen, Ultraschallschweißen, Vibrationsschweißen, Verkleben, Heißverprägen oder Schweißen mit induktiver Erwärmung stoffschlüssig mit den Gehäusekammern (21, 22) verbindbar ist.

5. Verstellgetriebe nach mindestens einem der vorangehenden Ansprüche, **dadurch gekennzeichnet, dass** die axial verstellbaren Lagerbuchsen (3, 4) eine Gewindestruktur aufweisen.

6. Verstellgetriebe nach mindestens einem der vorangehenden Ansprüche, **dadurch gekennzeichnet, dass** das Antriebsrad aus einer Antriebsschnecke (5) besteht, die über eine Antriebswelle mit einer Antriebseinrichtung verbunden ist, und dass das Abtriebsrad als Spindelmutter (6) ausgebildet ist, deren Außenverzahnung (60) mit der Schneckenverzahnung (50) der Antriebsschnecke (5) kämmt und die eine sich in axialer Richtung erstreckende Längsbohrung (65) aufweist, die mit einer Innenverzahnung in Form eines Schneckengewindes versehen ist, das mit einer Spindel (7) derart in Eingriff steht, dass die von der Antriebsschnecke (5) angetriebene Spindelmutter (6) auf der Spindel (7) abrollt und sich entlang der Spindel (7) bewegt.

7. Verstellgetriebe nach mindestens einem der vorangehenden Ansprüche 1 bis 5, **dadurch gekennzeichnet, dass** das Antriebsrad aus einer Antriebsschnecke (5) besteht, die über eine Antriebswelle mit einer Antriebseinrichtung verbunden ist, und dass das Abtriebsrad als Schraubrad (6) ausgebildet ist, das fest mit einer drehbar an einem ersten Verstellteil (8) der Verstelleinrichtung gelagerten Spindel (7) verbunden ist und bei einer Betätigung der Antriebseinrichtung die Spindel (7) dreht und ein relativ zum ersten Verstellteil (8) der Verstelleinrichtung verstellbares zweites Verstellteil (9) mit einer mit der Spindel (7) kämmenden Spindelmutter (6) verbunden ist, die auf der durch das Verstellgetriebe (1) in eine Drehbewegung versetzten Spindel (7) derart abrollt, dass das erste Verstellteil (8) der Verstelleinrichtung relativ zum zweiten Verstellteil (9) der Verstelleinrichtung verstellt wird.

8. Verstellgetriebe nach Anspruch 6 oder 7, **dadurch gekennzeichnet, dass** die Spindelmutter oder das Schraubrad (6) eine in Längsrichtung der Spindel (7) verlaufende zylindrische Kontur mit einer als Zylindermantel ausgebildeten Außenfläche aufweist, in die die in radialer Richtung senkrecht zur Längserstreckung der Spindelmutter oder des Schraubrades (6) nach innen in die Spindelmutter oder das Schraubrad (6) eingeformte Außenverzahnung (60) der Spindelmutter oder des Schraubrades (6) eingearbeitet ist, an die in axialer Richtung angrenzend verzahnungsfreie Abschnitte (63, 64) ausgebildet sind, an die sich axial jeweils ein Lagerbund (61, 62) anschließt.

9. Verstellgetriebe nach mindestens einem der vorangehenden Ansprüche, **dadurch gekennzeichnet, dass** das Getriebegehäuse (2) zwei senkrecht zueinander ausgerichtete zylinderförmige Gehäusekammern (21, 22) aufweist, von denen eine erste Gehäusekammer (21) die Antriebsschnecke (5) aufnimmt und oberhalb der die Spindelmutter oder das Schraubrad (6) aufnehmenden zweiten Gehäusekammer (22) angeordnet ist und dass im Bereich der Schnittstelle zwischen den Gehäusekammern (21, 22) eine Öffnung (24) vorgesehen ist, innerhalb der die Verzahnungen (50, 60) der Antriebsschnecke (5) und der Spindelmutter bzw. des Schraubrades (6) miteinander kämmen.

10. Verstellgetriebe nach Anspruch 9, **dadurch gekennzeichnet, dass** die erste Gehäusekammer (21) in Y-Richtung des Kraftfahrzeugs und die zweite Gehäusekammer (22) in X-Richtung des Kraftfahrzeugs bei mit der Verstelleinrichtung verbundenem Getriebegehäuse (2) ausgerichtet ist und dass der Abstand der ersten Gehäusekammer (21) von der zweiten Gehäusekammer (22) in Z-Richtung des Kraftfahrzeugs derart bemessen ist, dass die Verzahnungen (50, 60) der Antriebsschnecke (5) und der Spindelmutter bzw. des Schraubrades (6) im Wesentlichen spielfrei miteinander kämmen.

11. Verstellgetriebe nach Anspruch 9 oder 10, **dadurch gekennzeichnet, dass** eine dritte, rohrförmige Gehäusekammer (23) zur Aufnahme eines mit dem einen Verstellteil der Verstelleinrichtung verbundenen Verbindungsbolzens neben der ersten Gehäusekammer (21) angeordnet und parallel zur ersten Gehäusekammer (21) ausgerichtet ist.

12. Verstellgetriebe nach mindestens einem der vorangehenden Ansprüche, **gekennzeichnet durch** eine die erste Gehäusekammer (21) und die dritte, rohrförmige Gehäusekammer (23) umgebende, im Wesentlichen in X-Richtung ausgerichtete und zu den Enden der zweiten Gehäusekammer (22) führende Verstärkungsrippe (25).

13. Verstellgetriebe nach einem der vorangehenden Ansprüche 9 bis 11, **dadurch gekennzeichnet, dass** die Seiten der zweiten Gehäusekammer (22) bündig mit dem Ende der ersten und dritten Gehäusekammer (21, 23) fluchtend abgeflacht sind.

14. Verstellgetriebe nach mindestens einem der vorangehenden Ansprüche, **dadurch gekennzeichnet, dass** das Getriebegehäuse (2) aus Kunststoff besteht.

15. Verstellgetriebe nach Anspruch 10, **dadurch gekennzeichnet, dass** die Gehäusekammern (21, 22) und die mit der ersten und zweiten Gehäusekammer (21, 22) verbundenen, an den einen Stirnseiten (210, 220) der ersten und zweiten Gehäusekammer (21, 22) ausgebildeten Lagerstellen und die Verstärkungsrippe (25) durch Kleben, Reibschweißen, Laserschweißen oder Laserabschmelzschweißen miteinander verbunden sind.

16. Verstellgetriebe nach Anspruch 14, **dadurch gekennzeichnet, dass** die Gehäusekammern (21, 22), die mit der ersten und zweiten Gehäusekammer (21, 22) verbundenen Lagerstellen und die Verstärkungsrippe (25) durch Druck- oder Spritzgießen eines Kunststoffs hergestellt sind.

17. Verfahren zur Herstellung und Montage eines Verstellgetriebes nach mindestens einem der vorangehenden Ansprüche,
**dadurch gekennzeichnet, dass**
- ein einteiliges Getriebegehäuse (2) mit zwei senkrecht zueinander ausgerichteten, zylinderförmigen Gehäusekammern (21, 22) mit an den einen Stirnseiten (210, 220) ausgebildeten Lagerstellen mit einer zentrischen Bohrung durch Druck- oder Spritzgießen eines Kunststoffes oder durch eine Verbindung der Gehäusekammern (21, 22) mittels Laserschweißen, Ultraschallschweißen, Vibrationsschweißen, Verkleben, Heißverprägen oder Schweißen mit induktiver Erwärmung hergestellt wird,
- ein erster Lagerbund (51) einer Antriebsschnecke (5) in die Lagerstelle der ersten Gehäusekammer (21) und eine erster Lagerbund (61) einer Spindelmutter oder eines Schraubrades (6) in die Lagerstelle der zweiten Gehäusekammer (22) eingesteckt werden,
- eine erste Lagerbuchse (3) mit dem Innendurchmesser der ersten Gehäusekammer (21) angepasster zylinderförmiger Buchse (30) zum Zentrieren des zweiten Lagerbundes (52) der Antriebsschnecke (5) und eine zweite Lagerbuchse (4) mit dem Innendurchmesser der zweiten Gehäusekammer (22) angepasster zylinderförmiger Buchse (40) zum Zentrieren des zweiten Lagerbundes (62) der Spindelmutter oder des Schraubrades (6) in die erste und zweite Gehäusekammer (21, 22) eingesetzt und auf den zweiten Lagerbund (52, 62) der Antriebsschnecke (5) bzw. der Spindelmutter oder des Schraubrades (6) bis zur spielfreien Lagerung der Antriebsschnecke (5) bzw. der Spindelmutter oder des Schraubrades (6) aufgesteckt werden
- und die erste und zweite Lagerbuchse (3, 4) mit der ersten und zweiten Gehäusekammer (21, 22) durch Laserschweißen, Ultraschallschweißen, Vibrationsschweißen, Verkleben, Heißverprägen oder Schweißen mit induktiver Erwärmung verbunden werden.

## Claims

1. An adjusting transmission for an adjusting means of a motor vehicle with a one-part transmission housing (2) with a first housing chamber (21) for accommodating a drive wheel (5) with bearing collars (51, 52) formed on both sides of the drive wheel (5) and a second housing chamber (22) for accommodating a driven wheel (6) meshing with the drive wheel (5), whose axis is aligned substantially vertically to the axis of the drive wheel (5) and which includes bearing collars (61, 62) on both sides of the driven wheel (6), wherein in the first housing chamber (21) a bearing point (212) for accommodating a first bearing collar (51) of the drive wheel (5) and in the second housing chamber (22) a bearing point (220) for accommodating a first bearing collar (61) of the driven wheel (6) are formed,
**characterized by**
axially adjustable bearing bushings (3, 4) connectable with the housing chambers (21, 22) with cylindrical bushings (30, 40) adapted to the inside diameters of the housing chambers (21, 22) for centering the second bearing collars (52, 62) of the drive wheel (5) and the driven wheel (6).

2. The adjusting transmission according to claim 1, **characterized in that** the axially adjustable bearing bushings (3, 4) include a flange (31, 41) adjoining the cylindrical bushings (30, 40), which in the mounted condition of the adjusting transmission (1) rests against the open end faces (211, 221) of the housing chambers (21, 22).

3. The adjusting transmission according to claim 1 or 2, **characterized in that** the axially adjustable bearing bushings (3, 4) are cohesively connectable with the housing chambers (21, 22), in particular by means of an adhesive or welded connection.

4. The adjusting transmission according to claim 3, **characterized in that** the flange (31, 41) of the axially adjustable bearing bushings (3, 4) is cohesively connectable with the housing chambers (21, 22,) in particular by means of laser welding, ultrasonic welding, vibration welding, bonding, hot stamping or welding with inductive heating.

5. The adjusting transmission according to at least one of the preceding claims, **characterized in that** the axially adjustable bearing bushings (3, 4) have a thread structure.

6. The adjusting transmission according to at least one of the preceding claims, **characterized in that** the drive wheel consists of a drive worm (5) which is connected with a drive means via a drive shaft, and that the driven wheel is formed as spindle nut (6) whose external toothing (60) meshes with the worm toothing (50) of the drive worm (5) and which includes a longitudinal bore (65) extending in axial direction, which is provided with an internal toothing in the form of a worm thread which is in engagement with a spindle (7) such that the spindle nut (6) driven by the drive worm (5) rolls on the spindle (7) and moves along the spindle (7).

7. The adjusting transmission according to at least one of the preceding claims 1 to 5, **characterized in that** the drive wheel consists of a drive worm (5) which is connected with a drive means via a drive shaft, and that the driven wheel is formed as crossed helical gear (6) which is firmly connected with a spindle (7) rotatably mounted on a first adjusting part (8) of the adjusting means and rotates the spindle on actuation of the drive means, and a second adjusting part (9) adjustable relative to the first adjusting part (8) of the adjusting means is connected with a spindle nut (6) meshing with the spindle (7), which rolls on the spindle (7) put into a rotary movement by the adjusting transmission (1) such that the first adjusting part (8) of the adjusting means is adjusted relative to the second adjusting part (9) of the adjusting means.

8. The adjusting transmission according to claim 6 or 7, **characterized in that** the spindle nut or the crossed helical gear (6) has a cylindrical contour extending in longitudinal direction of the spindle (7) with an outer surface formed as cylinder jacket, in which there is incorporated the external toothing (60) of the spindle nut or the crossed helical gear (6) formed in the spindle nut or the crossed helical gear (6) inwards in radial direction vertical to the longitudinal extension of the spindle nut or the crossed helical gear (6), on which toothing-free portions (63, 64) adjoining in axial direction are formed, to each of which a bearing collar (61. 62) adjoins axially.

9. The adjusting transmission according to at least one of the preceding claims, **characterized in that** the transmission housing (2) includes two cylindrical housing chambers (21, 22) aligned vertical to each other, of which a first housing chamber (21) accommodates the drive worm (5) and is arranged above the second housing chamber (22) accommodating the spindle nut or the crossed helical gear (6), and that in the region of the interface between the housing chambers (21, 22) an opening (24) is provided, within which the toothings (50, 60) of the drive worm (5) and of the spindle nut or the crossed helical gear (6) mesh with each other.

10. The adjusting transmission according to claim 9, **characterized in that** the first housing chamber (21) is aligned in Y-direction of the motor vehicle and the second housing chamber (22) is aligned in X-direction of the motor vehicle, with the transmission housing (2) connected with the adjusting means, and that the distance of the first housing chamber (21) from the second housing chamber (22) in Z-direction of the motor vehicle is dimensioned such that the toothings (50, 60) of the drive worm (5) and of the spindle nut or the crossed helical gear (6) mesh with each other substantially without clearance.

11. The adjusting transmission according to claim 9 or 10, **characterized in that** a third, tubular housing chamber (23) for accommodating a connecting bolt connected with the one adjusting part of the adjusting means is arranged beside the first housing chamber (21) and aligned parallel to the first housing chamber (21).

12. The adjusting transmission according to at least one of the preceding claims, **characterized by** a reinforcing rib (25) surrounding the first housing chamber (21) and the third, tubular housing chamber (23), which substantially is aligned in X-direction and leads to the ends of the second housing chamber (22).

13. The adjusting transmission according to any of the preceding claims 9 to 11, **characterized in that** the sides of the second housing chamber (22) are flattened flush and in line with the ends of the first and third housing chamber (21, 23).

14. The adjusting transmission according to at least one of the preceding claims, **characterized in that** the transmission housing (2) is made of plastics.

15. The adjusting transmission according to claim 10, **characterized in that** the housing chambers (21, 22) and the bearing points connected with the first and second housing chamber (21, 22), which are formed on the one end faces (210, 220) of the first and second housing chamber (21, 22), and the reinforcing rib (25) are connected with each other by gluing, frictional welding, laser welding or laser melt-off welding.

16. The adjusting transmission according to claim 14, **characterized in that** the housing chambers (21, 22), the bearing points connected with the first and second housing chamber (21, 22) and the reinforcing rib (25) are made by pressure casting or injection molding of a plastic material.

17. A method for the manufacture and assembly of an adjusting transmission according to at least one of the preceding claims,
**characterized in that**
- a one-part transmission housing (2) with two cylindrical housing chambers (21, 22) aligned vertically to each other with bearing points with a centric bore formed on the one end faces (210, 220) is made by pressure casting or injection molding of a plastic material or by connecting the housing chambers (21, 22) by means of laser welding, ultrasonic welding, vibration welding, gluing, hot stamping or welding with inductive heating,
- a first bearing collar (51) of a drive worm (5) is inserted into the bearing point of the first housing chamber (21) and a first bearing collar (61) of a spindle nut or a crossed helical gear (6) is inserted into the bearing point of the second housing chamber (22),
- a first bearing bushing (3) with a cylindrical bushing (30) adapted to the inside diameter of the first housing chamber (21) for centering the second bearing collar (52) of the drive worm (5) and a second bearing bushing (4) with a cylindrical bushing (40) adapted to the inside diameter of the second housing chamber (22) for centering the second bearing collar (62) of the spindle nut or the crossed helical gear (6) are inserted into the first and second housing chamber (21, 22) and are put onto the second bearing collar (52, 62) of the drive worm (5) or of the spindle nut or the crossed helical gear (6) up to the clearance-free bearing of the drive worm (5) or of the spindle nut or the crossed helical gear (6),
- and the first and second bearing bushing (3, 4) are connected with the first and second housing chamber (21, 22) by laser welding, ultrasonic welding, vibration welding, gluing, hot stamping or welding with inductive heating.

## Revendications

1. Mécanisme de déplacement pour un système de déplacement dans un véhicule automobile comprenant un boîtier de transmission (2) d'une seule pièce avec une première chambre de boîtier (21) destinée à loger une roue d'entraînement (5) avec des collerettes de palier (51, 52) réalisées des deux côtés de la roue d'entraînement (5) et avec une deuxième chambre de boîtier (22) destinée à loger une roue menée (6) qui engrène avec la roue d'entraînement (5), dont l'axe est orienté sensiblement perpendiculairement à l'axe de la roue d'entraînement (5) et présentant des deux côtés de la roue d'entraînement (6) des collerettes de palier (61, 62), dans lequel un emplacement de palier (212) est réalisé dans la première chambre de boîtier (21) pour loger une première collerette de palier (51) de la roue d'entraînement (5) et un emplacement de palier (220) est réalisé dans la deuxième chambre de boîtier (22) pour loger une première collerette de palier (61) de la roue menée (6),
**caractérisé par**
des douilles de palier (3, 4) axialement déplaçables et susceptibles d'être reliées aux chambres de palier (21, 22), comprenant des douilles (30, 40) de forme cylindrique ajustées aux diamètres intérieurs des chambres de boîtier (21, 22) pour centrer les deuxièmes collerettes de palier (52, 62) de la roue d'entraînement (5) et de la roue menée (6).

2. Mécanisme de déplacement selon la revendication 1, **caractérisé en ce que** les douilles de palier (3, 4) axialement déplaçables comprennent une bride (31, 41) qui se raccorde aux douilles (30, 40) de forme cylindrique et qui, dans l'état monté du mécanisme de déplacement (1), s'applique contre les côtés frontaux ouverts (211, 221) des chambres de boîtier (21, 22).

3. Mécanisme de déplacement selon la revendication 1 ou 2, **caractérisé en ce que** les douilles de palier (3, 4) axialement déplaçables (3, 4) sont susceptibles d'être reliées aux chambres de boîtier (21, 22) par coopération de matière, en particulier au moyen d'une liaison collée ou d'une liaison soudée.

4. Mécanisme de déplacement selon la revendication 3, **caractérisé en ce que** la bride (31, 41) des douilles de palier (3, 4) axialement déplaçables est susceptible d'être reliée aux chambres de boîtier (21, 22) par coopération de matières en particulier au moyen d'un soudage au laser, d'un soudage par ultrasons, d'un soudage par vibrations, d'un collage, d'un thermo-matriçage ou d'un soudage par échauffement inductif.

5. Mécanisme de déplacement selon l'une au moins des revendications précédentes, **caractérisé en ce que** les douilles de palier (3, 4) axialement déplaçables présentent une structure à pas de vis.

6. Mécanisme de déplacement selon l'une au moins des revendications précédentes, **caractérisé en ce que** la roue d'entraînement est une vis sans fin d'entraînement (5) qui est reliée via un arbre d'entraînement à un système d'entraînement, et **en ce que** la roue menée est réalisée sous forme d'écrou de broche (6) dont la denture extérieure (60) engrène avec la denture (50) de la vis sans fin d'entraînement (5), et qui présente un perçage longitudinal (65) en direction axiale qui est doté d'une denture intérieure sous la forme d'une spire de vis sans fin, qui est en engagement avec une broche (7) de telle façon que l'écrou de broche (6) entraîné par la vis sans fin d'entraînement (5) roule sur la broche (7) et se déplace le long de la broche (7).

7. Mécanisme de déplacement selon l'une au moins des revendications précédentes 1 à 5, **caractérisé en ce que** la roue d'entraînement est une vis sans fin d'entraînement (5) qui est reliée via un arbre d'entraînement à un système d'entraînement, et **en ce que** la roue menée est réalisée sous forme de roue à vis (6), laquelle est reliée fermement en rotation à une broche (7) montée en rotation sur une première partie déplaçable (8) du système de déplacement et, lors d'un actionnement du système d'entraînement, fait tourner la broche (7), et une deuxième partie déplaçable (9), déplaçable par rapport à la première partie déplaçable (8) du système de déplacement est reliée à un écrou de broche (6) en engrènement avec la broche (7), ledit écrou roulant sur la broche (7) mise en un mouvement de rotation par le mécanisme de déplacement (1) de telle façon que la première partie déplaçable (8) du système de déplacement est déplacée par rapport à la deuxième partie déplaçable (9) du système de déplacement.

8. Mécanisme de déplacement selon la revendication 6 ou 7, **caractérisé en ce que** l'écrou de broche ou la roue à vis (6) présente un contour cylindrique s'étendant en direction longitudinale de la broche (7), avec une surface extérieure réalisée sous forme d'enveloppe cylindrique, dans laquelle est ménagée la denture extérieure (60), de l'écrou de broche ou de la roue à vis (6), formée en direction radiale perpendiculairement à l'extension longitudinale de l'écrou de broche ou de la roue à vis (6) vers l'intérieur dans l'écrou de broche ou dans la roue à vis (6), avec des tronçons (63, 64) dépourvus de denture réalisés adjacents à cette denture en direction axiale, auxquels se raccorde une collerette de palier (61, 62) respective en direction axiale.

9. Mécanisme de déplacement selon l'une au moins des revendications précédentes, **caractérisé en ce que** le boîtier de transmission (2) comporte deux chambres de boîtier de forme cylindrique (21, 22) orientées perpendiculairement l'une à l'autre, parmi lesquelles une première chambre de boîtier (21) loge la vis sans fin d'entraînement (5) et est agencée au-dessus de la deuxième chambre de boîtier (21) qui loge l'écrou de broche ou la roue à vis (6), et **en ce qu'**il est prévu dans la région de l'interface entre les chambres de boîtier (21, 22) une ouverture (24) à l'intérieur de laquelle les dentures (50, 60) de la vis sans fin d'entraînement (5) et de l'écrou de broche ou de la roue à vis (6) sont en engrènement mutuel.

10. Mécanisme de déplacement selon la revendication 9, **caractérisé en ce que** la première chambre de boîtier (21) est orientée dans la direction Y du véhicule automobile, et la deuxième chambre de boîtier (22) est orientée dans la direction X du véhicule automobile lorsque le boîtier de transmission (2) est relié au système de déplacement, et **en ce que** la distance de la première chambre de boîtier (21) vis-à-vis de la deuxième chambre de boîtier (22) dans la direction Z du véhicule automobile est dimensionnée de telle façon que les dentures (50, 60) de la vis sans fin d'entraînement (5) et de l'écrou de broche ou de la roue à vis (6) engrènent l'une avec l'autre sensiblement sans jeu.

11. Mécanisme de déplacement selon la revendication 9 ou 10, **caractérisé en ce qu'**une troisième chambre de boîtier (23) de forme tubulaire et destinée à loger un goujon de liaison, relié à l'une des parties déplaçables du système de déplacement, est agencée à côté de la première chambre de boîtier (21) et orientée parallèlement à la première chambre de boîtier (21).

12. Mécanisme de déplacement selon l'une au moins des revendications précédentes, **caractérisé par** une nervure de renforcement (25) qui entoure la première chambre de boîtier (21) et la troisième chambre de boîtier de forme tubulaire (23), orientée sensiblement en direction X et menant aux extrémités de la deuxième chambre de boîtier (22).

13. Mécanisme de déplacement selon l'une des revendications précédentes 9 à 11, **caractérisé en ce que** les côtés de la deuxième chambre de boîtier (22) sont aplatis de manière à être alignés en affleurement avec l'extrémité de la première et de la troisième chambre de boîtier (21, 23).

14. Mécanisme de déplacement selon l'une au moins des revendications précédentes, **caractérisé en ce que** le boîtier de transmission (2) est en matière plastique.

15. Mécanisme de déplacement selon la revendication 10, **caractérisé en ce que** les chambres de boîtier (21, 22) et les emplacements de palier reliés à la première et à la deuxième chambre de boîtier (21, 22) et formés sur une des faces frontales (210, 220) de la première et de la deuxième chambre de boîtier (21, 22) et la nervure de renforcement (25) sont reliés les un(e)s aux autres par collage, par soudage à friction, par soudage au laser ou par soudage-fusion au laser.

16. Mécanisme de déplacement selon la revendication 14, **caractérisé en ce que** les chambres de boîtier (21, 22), les emplacements de palier reliés à la première et à la deuxième chambre de boîtier (21, 22), et la nervure de renforcement (25) sont fabriqué(e)s par moulage sous pression ou par injection d'une matière plastique.

17. Procédé pour la fabrication et le montage d'un mécanisme de déplacement selon l'une au moins des revendications précédentes, **caractérisé en ce que**
- un boîtier de transmission (2) d'une seule pièce avec deux chambres de boîtier (21, 22) de forme cylindrique et orientées perpendiculairement l'une à l'autre, avec des emplacements de palier réalisés sur les unes des faces frontales (210, 220) et dotés d'un perçage centré est fabriqué par moulage sous pression ou par injection d'une matière plastique ou par une liaison des chambres de boîtier (21, 22) au moyen d'un soudage au laser, d'un soudage aux ultrasons, d'un soudage par vibrations, d'un collage, d'un matriçage à chaud ou d'un soudage par échauffement inductif,
- une première collerette de palier (51) avec une vis sans fin d'entraînement (5) est enfilée dans l'emplacement de palier de la première chambre de boîtier (21) et une première collerette de palier (61) d'un écrou de broche ou d'une roue à vis (6) est enfilée dans l'emplacement de palier de la deuxième chambre de boîtier (22),
- une première douille de palier (3) avec une douille de forme cylindrique (30) ajustée au diamètre intérieur de la première chambre de boîtier (21) et destinée au centrage de la deuxième collerette de palier (52) de la vis sans fin d'entraînement (5), et une deuxième douille de palier (4) avec une douille de forme cylindrique (40) ajustée au diamètre intérieur de la deuxième chambre de boîtier (22) et destinée au centrage de la deuxième collerette de palier (62) de l'écrou de broche ou de la roue à vis (6) sont mises en place dans la première et dans la deuxième chambre de boîtier (21, 22) et enfilées sur la deuxième collerette de palier (52, 62) de la vis sans fin d'entraînement (5) ou de l'écrou de broche ou de la roue à vis (6) jusqu'à un montage sans jeu de la vis sans fin d'entraînement (5) ou de l'écrou de broche ou de la roue à vis (6),
- et la première et la deuxième douille de palier (3, 4) sont reliées à la première et à la deuxième chambre de boîtier (21, 22) par soudage au laser, par soudage aux ultrasons, par soudage par vibrations, par collage, par matriçage à chaud ou par soudage par échauffement inductif.
